# EUROPÄISCHE PATENTANMELDUNG

(11) **EP 3 572 175 A1**
(43) Veröffentlichungstag der Anmeldung: **27.11.2019**
(21) Anmeldenummer: 18173878.2
(22) Anmeldetag: 23.05.2018
(51) Int. Cl.: B23K 9/173, B23K 35/38, B23K 9/167, B23K 35/30, B23K 9/04

(54) **FERTIGUNGS- UND REPARATURSCHWEISSEN VON GUSSEISEN MIT KUGELGRAPHIT**

(71) Anmelder: Siemens Aktiengesellschaft, 80333 München (DE)
(72) Erfinder: Brußk, Stefan, 45479 Mülheim an der Ruhr (DE); Luithle, Alexander, 44789 Bochum (DE); Schreiber, Tim, 58454 Witten (DE)

(57) **Zusammenfassung**

Die Erfindung betrifft ein Verfahren zur Herstellung einer Oberfläche eines Grundwerkstoffes (2), wobei der Grundwerkstoff (2) Gusseisen mit Kugelgraphit aufweist, wobei zunächst eine Teiloberfläche (3) lokalisiert wird, in einem weiteren Schritt eine zweilagige Pufferschicht (5) mittels einer WIG-Schweißung mit dem Schweißzusatz NiFe verwendet wird, wobei in einem weiteren Schritt eine Füllschicht (6) auf der Pufferschicht (5) aufgebracht wird, wobei das MIG-Schweißverfahren in Verbindung mit NiFe-2 nach EN ISO 1071 als Schweißzusatzwerkstoff verwendet wird.

## Beschreibung

Die Erfindung betrifft ein Verfahren zur Herstellung einer Oberfläche eines Grundwerkstoffes, wobei der Grundwerkstoff Gusseisen aufweist.

Gusskomponenten, die aus Gusseisen mit Kugelgraphit hergestellt werden, werden beispielsweise in Strömungsmaschinen wie z. B. in Dampfturbinen eingesetzt. Diese Gusskomponenten können großvolumig ausgebildet sein. Bei der Herstellung der Gusskomponente können Gussfehler, wie z. B. Poren oder Lunker auftauchen. Von Fall zu Fall muss hierbei entschieden werden, ob die Gusskomponente mit dem bestehenden Fehler ohne weitere Maßnahmen verwendet werden kann. Eine schweißtechnische Bearbeitung solcher Gussbauteile ist nur bedingt möglich. Beispielsweise wäre eine Schweißung mit artgleichem Schweißgut schwierig, da eine hohe Vorwärmtemperatur, die zwischen 550°C und 650°C liegen muss, verwendet werden muss. Eine weitere Möglichkeit, den Gussfehler zu beheben, ist es, mit artfremden Schweißzusatz, beispielsweise Ni-Fe-Elektroden zu Schweißen, was keine erhöhten Vorwärmtemperaturen erforderlich macht.

Allerdings besteht bei beiden Schweißungen das Problem, dass die mechanischen Eigenschaften, die durch das jeweilige Verfahren erzielt werden, die mechanischen Eigenschaften des Grundwerkstoffes häufig nicht erreichen.

Daher muss von Fall zu Fall entschieden werden, ob die Gusskomponente verworfen oder/und neu gefertigt werden muss.

Nicht nur bei der Neufertigung, sondern auch im Servicefall, müssen Schäden an Gusseisenkomponenten repariert werden, da in kurzen Revisionszeiträumen keine Neubauteilfertigung möglich ist.

Es ist Aufgabe der Erfindung, ein Verfahren zur Herstellung einer Oberfläche eines Grundstoffes anzugeben, das eine verbesserte Qualität aufweist.

Gelöst wird diese Aufgabe durch ein Verfahren zur Herstellung einer Oberfläche eines Grundwerkstoffes, wobei der Grundwerkstoff Gusseisen aufweist, mit den Schritten:
- Lokalisieren einer Teiloberfläche,
- Herstellung einer ersten Pufferschicht auf der Teiloberfläche, wobei ein Puffer-Schweißverfahren in Verbindung mit einem Puffer-Schweißzusatz verwendet wird, wobei die Schweißparameter so ausgewählt sind, dass die Wärmeeinbringung in den Grundwerkstoff gering ist,
- Herstellung einer Füllschicht auf der Pufferschicht, wobei das MIG-Schweißverfahren verwendet wird, wobei ein NiFe-Schweißzusatzwerkstoff verwendet wird.

Vorteilhafte Weiterbildungen sind in den Unteransprüchen angegeben.

Mit der Erfindung wird somit das Ziel verfolgt, eine Schweißmethode mit Lichtbogenschweißprozessen anzugeben, das ohne bzw. mit niedrigen Vorwärmtemperaturen auskommt, welche vergleichbare Eigenschaften zum Grundwerkstoff erreicht.

Die Schweißmethode beinhaltet einen zweistufigen Prozess mit einem auf die Schweißaufgabe und den Schweißprozess abgestimmten Schweißzusatzwerkstoff, welcher in erheblichem Maße Einfluss auf die Qualität der Schweißung hat. Durch eine gezielte Auswahl des Schweißprozesses, des Schweißzusatzwerkstoffs und der Schweißparameter ist es möglich, sowohl Fehler in der Anbindung an den Grundwerkstoff, als auch Fehler im Schweißgut bzw. der Füllung zu unterbinden.

Zunächst wird erfindungsgemäß über eine Pufferung die Anbindung an den Grundwerkstoff geschaffen. In einem zweiten Schritt wird anschließend die Füllung realisiert.

Mit dem erfindungsgemäßen Schweißverfahren/-Prozess ist es möglich, Fertigungs- und Reparaturschweißungen herzustellen, die die mechanischen Eigenschaften des Grundwerkstoffs erfüllen. Dies erfolgt bei niedrigen Temperaturen (schwitzwasserfrei, ca. 100°C) und begünstigt somit das Schweißen an fertig bearbeiteten oder nahezu fertig bearbeiteten Bauteilen, da der Verzug infolge der geringen Wärmeeinbringung minimiert wird.

Ein wesentlicher Vorteil ist, dass sich bei der Neufertigung von Gusseisenkomponenten, bei denen z. B. während der spanenden Bearbeitung Gussfehler angeschnitten werden, durch die erfindungsgemäßen Schweißung repariert werden können. Ein Verwerfen der Gusseisenkomponente samt damit verbundener zeitaufwendiger Neufertigung ist daher nicht notwendig.

Für Bauteile, die sich bereits im Einsatz befinden und bei denen beispielsweise im Zuge der Revision Schäden in Form von Rissen, Materialabtrag o. ä. festgestellt wurden, bietet sich das erfindungsgemäße Verfahren an, diese schweißtechnisch zu ertüchtigen. Folglich ist eine Verlängerung des Revisionszeitraums häufig nicht erforderlich.

In einer ersten vorteilhaften Weiterbildung weist der Grundwerkstoff Gusseisen mit Kugelgraphit auf.

In einer weiteren vorteilhaften Weiterbildung wird als Pufferschweißverfahren das WIG-Schweißverfahren eingesetzt, wobei als Schweißzusatz NiFe-Schweißzusatz (Typ NiFe-2 nach EN ISO 1071) verwendet wird.

Alternativ hierzu kann das MIG-Schweißverfahren als Puffer-Schweißverfahren eingesetzt werden, wobei als Schweißzusatz NiFe-Schweißzusatz vom Typ NiFe-1 nach EN ISO 1071 verwendet wird.

In einer weiteren vorteilhaften Weiterbildung wird vor Herstellung der Füllschicht eine zweite Pufferschicht aufgebracht.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Ausführungsbeispiele der Erfindung werden nachfolgend anhand der Zeichnung beschrieben. Diese soll die Ausführungsbeispiele nicht maßgeblich darstellen. Vielmehr ist die Zeichnung, wo zur Erläuterung dienlich, in schematisierter und/oder leicht verzerrter Form ausgeführt. Im Hinblick auf Ergänzungen der in der Zeichnung unmittelbar erkennbaren Lehren wird auf den einschlägigen Stand der Technik verwiesen.

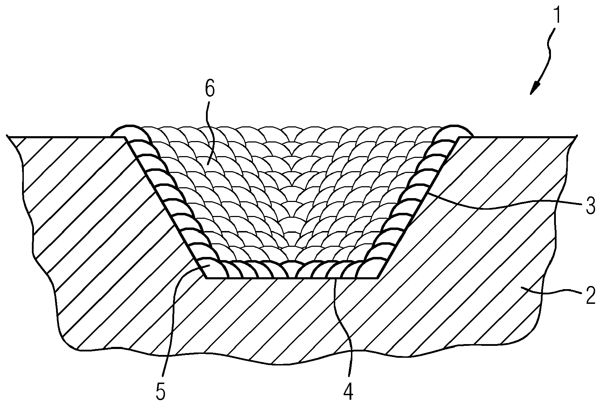

Es zeigt
- Figur 1: eine Schnittdarstellung durch eine Komponente

Die Figur zeigt eine Komponente 1, die durch ein Gussverfahren hergestellt wurde. Der Grundwerkstoff 2 weist Gusseisen mit Kugelgraphit auf. Die Komponente 1 weist eine Teiloberfläche 3 auf, wobei die Teiloberfläche 3 als eine Vertiefung 4 ausgebildet ist. Zur Anbindung des Schweißgutes an den Grundwerkstoff 2 wird das WIG-Schweißverfahren in Verbindung mit einem NiFe-Schweißzusatz (Typ NiFe-2 nach EN ISO 1071) gewählt und zweilagig ausgeführt, wobei die Schweißparameter so ausgewählt werden, dass die Wärmeeinbringung in den Grundwerkstoff 2 gering ist.

Somit wird in einem ersten Schritt die Teiloberfläche 3 lokalisiert. In einem nächsten Schritt wird eine erste Pufferschicht 5 auf der Teiloberfläche 3 aufgebracht. Mit den geeignet gewählten Schweißparametern wird erreicht, dass in der Anbindung und in der Wärmeeinflusszone keine Risse entstehen und die Wärmeeinflusszone vergleichweise schmal und gleichmäßig ausgebildet wird. Durch die Schweißparameterwahl der zweiten WIG-Lage wird die Wärmeeinflusszone zum Grundwerkstoff 2 gezielt thermisch beeinflusst und somit die mechanischen Eigenschaften optimiert.

Alternativ kann zu dem WIG-Schweißprozess auch auf einen MIG-Schweißprozess zurückgegriffen werden, dessen Parameter ebenfalls so weit modifiziert werden, dass die Wärmeeinbringung in den Grundwerkstoff gering ist. Als Schweißzusatz wird ein NiFe-Schweißzusatz (Typ NiFe-1 nach EN ISO 1071) eingesetzt.

In einem weiteren Schritt wird, wenn die zweilagige Pufferung nicht ausreicht, um die Komponente auszugleichen, eine Füllschicht 6 auf die Pufferschicht 5 aufgebracht. Dies erfolgt mittels einer Füllschweißung mit dem MIG-Schweißprozess. In diesem MIG-Schweißprozess wird ebenfalls ein NiFe-Schweißzusatzwerkstoff eingesetzt, der identisch mit dem Schweißzusatzwerkstoff ist, der beim WIG-Schweißen zur Anbindung an die erste Lage genutzt wird.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Herstellung einer Oberfläche eines Grundwerkstoffes (2),
wobei der Grundwerkstoff (2) Gusseisen aufweist,
mit den Schritten:
- Lokalisieren einer Teiloberfläche (3),
- Herstellung einer ersten Pufferschicht (5) auf der Teiloberfläche (3), wobei ein Puffer-Schweißverfahren in Verbindung mit einem Puffer-Schweißzusatz verwendet wird, wobei die Schweißparameter so ausgewählt sind, dass die Wärmeeinbringung in den Grundwerkstoff (2) gering ist,
- Herstellung einer Füllschicht (6) auf der Pufferschicht (5), wobei das MIG-Schweißverfahren verwendet wird, wobei ein NiFe-Schweißzusatzwerkstoff verwendet wird, insbesondere ein NiFe-Schweißzusatz (Typ NiFe-2 nach EN ISO 1071).

2. Verfahren nach Anspruch 1,
wobei der Grundwerkstoff (2) Gusseisen mit Kugelgraphit aufweist.

3. Verfahren nach Anspruch 1 oder 2,
wobei die Teiloberfläche (3) eine Vertiefung (4) aufweist.

4. Verfahren nach einem der vorhergehenden Ansprüche,
wobei als Puffer-Schweißverfahren das WIG-Schweißverfahren eingesetzt wird.

5. Verfahren nach Anspruch 4,
wobei als Schweißzusatz NiFe-Schweißzusatz (Typ NiFe-2 nach EN ISO 1071) verwendet wird.

6. Verfahren nach einem der Ansprüche 1 bis 3,
wobei als Puffer-Schweißverfahren das MIG-Schweißverfahren eingesetzt wird.

7. Verfahren nach Anspruch 6,
wobei als Schweißzusatz NiFe-Schweißzusatz (Typ NeFe-1 nach EN ISO 1071) verwendet wird.

8. Verfahren nach einem der vorhergehenden Ansprüche,
wobei vor Herstellung der Füllschicht (6) eine zweite Pufferschicht (5) aufgebracht wird.

9. Komponente (1) für eine Strömungsmaschine,
hergestellt mit einem Verfahren nach einem der Ansprüche 1 bis 8.
